# EUROPEAN PATENT SPECIFICATION

(11) **EP 4 614 211 B1**
(45) Date of publication and mention of the grant of the patent: **09.12.2026**
(21) Application number: 23885952.4
(22) Date of filing: 19.07.2023
(51) Int. Cl.: G02B 27/01, G02B 27/09, B60K 35/00, B60R 11/02

(54) **DISPLAY DEVICE FOR VEHICLE**
ANZEIGEVORRICHTUNG FÜR EIN FAHRZEUG
DISPOSITIF D'AFFICHAGE POUR VÉHICULE

(30) Priority: 04.11.2022 KR 20220146158
(43) Date of publication of application: 10.09.2025
(73) Proprietor: LG Electronics Inc., Yeongdeungpo-gu Seoul 07336 (KR)
(72) Inventor: LEE, Sangil, Seoul 06772 (KR); KWON, Yunyoung, Seoul 06772 (KR); LEE, Kyoungil, Seoul 06772 (KR); LEE, Seunggyu, Seoul 06772 (KR)
(74) Representative: Schornack, Oliver
(86) International application number: PCT/KR2023/010343
(87) International publication number: WO 2024/096255

(56) References cited:
- WO-A1-2022/022886
- CN-B- 101 334 530
- KR-A- 20170 068 116
- KR-A- 20190 079 173
- KR-U- 20180 002 970
- US-A1- 2016 004 081
- US-A1- 2016 202 479

## Description

### BACKGROUND

### 1. Technical Field

The present disclosure relates to a display device for a vehicle, and more particularly, to a display device for a vehicle capable of reducing the size of the display device for the vehicle while implementing a projection image on a large screen.

### 2. Description of the Related Art

A vehicle is an apparatus that moves in the direction desired by a user riding in it. A representative example is an automobile.

Meanwhile, a display device for a vehicle is installed inside the vehicle, for the convenience of a user using the vehicle.

For example, a display is placed on a cluster, etc., to display various types of information. Meanwhile, in order to display vehicle driving information, etc., separately from the cluster, various displays, such as an Audio Video Navigation (AVN) display and a head-up display configured to output a projection image on a windshield, includes been installed in a vehicle.

Meanwhile, the information displayed through a head-up display is increasing. For example, in order to realize an augmented reality-based head-up display, information on a road, an automobile, and a surrounding object in a street must be displayed, so the screen of the head-up display must be larger, and ultimately, the size of the head-up display must be increased.

Meanwhile, Japanese Registered Patent Publication No. 4474711, which is a prior art document 1, relates to a head-up display, and discloses a HUD optical structure.

Meanwhile, prior art document 2, US Patent Publication No. US20120224062 relates to a head-up display, and discloses a HUD optical structure.

However, according to prior art documents 1 and 2, since the optical path after a concave mirror must be configured internally in a head-up display, there is a disadvantage that the size of a head-up display must be increased in order to realize an augmented reality-based head-up display.

Meanwhile, if the size of a head-up display is increased, there is a problem that there is a restriction on mounting it inside a vehicle. Other relevant prior art (CN 101 334 530 B) relates to a display device for a vehicle wherein the image generating device is configured to output a laser-scanning based projection image towards a windshield. The image is formed on a diffusing unit after having been reflected from a first area of the windshield and the image is then reflected at a second area of the windshield for projecting the image to a third area.

### SUMMARY

The problem of the present disclosure is to provide a display device for a vehicle capable of reducing the size of the display device for the vehicle while implementing a projection image on a large screen.

Meanwhile, another problem of the present disclosure is to provide a display device for a vehicle capable of reducing the size while securing an optical path.

According to an embodiment of the present disclosure, there is provided a display device for a vehicle including: an image generating device configured to output a projection image toward a windshield; and a mirror configured to reflect a projection image reflected from a first area of the windshield, toward the windshield, wherein the projection image from the mirror is reflected from a second area of the windshield and output to a third area.

Meanwhile, the second area of the windshield is closer to the third area than the first area of the windshield.

Meanwhile, an incident angle of the projection image incident on the first area of the windshield is greater than an incident angle of the projection image incident on the second area of the windshield.

Meanwhile, the image generating device is closer to the third area than the mirror.

Meanwhile, the position of the image generating device is disposed at a higher position than the position of the mirror.

Meanwhile, the mirror is closer to the third area than the image generating device.

Meanwhile, the position of the mirror can be disposed at a higher position than the position of the image generating device.

Meanwhile, the display device for a vehicle according to an embodiment of the present disclosure further includes a transparent cover disposed between the image generating device and the windshield.

Meanwhile, the image generating device includes a digital mirror device or a liquid crystal display panel.

Meanwhile, in the windshield, the reflectivity of S polarized light can be greater than the reflectivity of P polarized light.

Meanwhile, the image generating device is configured to output a projection image to the first area of the windshield to which a P polarized light reflection film is attached, wherein the mirror is configured to reflect the projection image to the second area of the windshield to which the P polarized light reflection film is attached.

Meanwhile, the first area of the windshield corresponds to a black masking area or a frit area.

Meanwhile, the display device for a vehicle according to an embodiment of the present disclosure further includes a transparent cover disposed between the image generating device and the windshield; and a phase delay film attached to the transparent cover, wherein the image generating device includes a liquid crystal display panel, wherein the liquid crystal display panel is configured to output a projection image of P polarized light, wherein the transparent cover is configured to output a projection image of right circular polarized light to the first area of the windshield based on the projection image of P polarized light, wherein the mirror outputs a projection image of S polarized light based on a projection image of left circular polarized light from the first area of the windshield, wherein the transparent cover is configured to output a projection image of left circular polarized light to the second area of the windshield based on the projection image of S polarized light.

Meanwhile, the display device for a vehicle according to an embodiment of the present disclosure further includes a transparent cover disposed between the image generating device and the windshield, wherein a phase delay film is attached to the first area of the windshield, wherein the image generating device includes a liquid crystal display panel, wherein the liquid crystal display panel is configured to output a projection image of P polarized light, wherein the mirror reflects a projection image of S polarized light from the first area of the windshield, wherein the transparent cover is configured to output the projection image of S polarized light to the second area of the windshield.

Meanwhile, the mirror includes: a base; and a mirror coating member formed on the base.

Meanwhile, the mirror includes: a base; a photoadhesive film formed on the base; and a reflection film on the photoadhesive film.

Meanwhile, an optical path before a first reflection of the projection image output from the image generating device is longer than an optical path from after the first reflection to before a second reflection.

According to another embodiment of the present disclosure, there is provided a display device for a vehicle including: an image generating device configured to output a projection image toward a windshield; and a mirror configured to reflect a projection image reflected first from the windshield toward the windshield, wherein the projection image from the mirror is reflected secondarily from the windshield, and wherein an optical path before a first reflection of the projection image output from the image generating device is longer than an optical path from after the first reflection to before a second reflection.

### EFFECTS OF THE DISCLOSURE

According to an embodiment of the present disclosure, there is provided a display device for a vehicle including: an image generating device configured to output a projection image toward a windshield; and a mirror configured to reflect a projection image reflected from a first area of the windshield, toward the windshield, wherein the projection image from the mirror is reflected from a second area of the windshield and output to a third area. Accordingly, it is possible to reduce the size of the display device for the vehicle while implementing a projection image on a large-screen. In particular, it is possible to reduce the size while securing an optical path.

Meanwhile, the second area of the windshield is closer to the third area than the first area of the windshield. Accordingly, it is possible to reduce the size of the display device for the vehicle while implementing a projection image on a large-screen.

Meanwhile, an incident angle of the projection image incident on the first area of the windshield is greater than an incident angle of the projection image incident on the second area of the windshield. Accordingly, it is possible to reduce the size of the display device for the vehicle while implementing a projection image on a large-screen.

Meanwhile, the image generating device is closer to the third area than the mirror. Accordingly, it is possible to reduce the size of the display device for the vehicle while implementing a projection image on a large-screen.

Meanwhile, the position of the image generating device is disposed at a higher position than the position of the mirror. Accordingly, it is possible to reduce the size of the display device for the vehicle while implementing a projection image on a large-screen.

Meanwhile, the mirror is closer to the third area than the image generating device. Accordingly, it is possible to reduce the size of the display device for the vehicle while implementing a projection image on a large-screen.

Meanwhile, the position of the mirror can be disposed at a higher position than the position of the image generating device. Accordingly, it is possible to reduce the size of the display device for the vehicle while implementing a projection image on a large-screen.

Meanwhile, the display device for a vehicle according to an embodiment of the present disclosure further includes a transparent cover disposed between the image generating device and the windshield. Accordingly, it is possible to output the projection image to the outside of the image generating device while protecting the inside of the image generating device.

Meanwhile, the image generating device includes a digital mirror device or a liquid crystal display panel. Accordingly, it is possible to output the projection image to the outside of the image generating device.

Meanwhile, in the windshield, the reflectivity of S polarized light can be greater than the reflectivity of P polarized light. Accordingly, the brightness of the projection image based on S polarized light can be higher.

Meanwhile, the image generating device is configured to output a projection image to the first area of the windshield to which a P polarized light reflection film is attached, wherein the mirror is configured to reflect the projection image to the second area of the windshield to which the P polarized light reflection film is attached. Accordingly, it is possible to reduce the size of the display device for the vehicle while implementing a projection image on a large-screen.

Meanwhile, the first area of the windshield corresponds to a black masking area or a frit area. Accordingly, the brightness of the projection image can be improved.

Meanwhile, the display device for a vehicle according to an embodiment of the present disclosure further includes a transparent cover disposed between the image generating device and the windshield; and a phase delay film attached to the transparent cover, wherein the image generating device includes a liquid crystal display panel, wherein the liquid crystal display panel is configured to output a projection image of P polarized light, wherein the transparent cover is configured to output a projection image of right circular polarized light to the first area of the windshield based on the projection image of P polarized light, wherein the mirror outputs a projection image of S polarized light based on a projection image of left circular polarized light from the first area of the windshield, wherein the transparent cover is configured to output a projection image of left circular polarized light to the second area of the windshield based on the projection image of S polarized light. Accordingly, it is possible to reduce the size of the display device for the vehicle while implementing a projection image of left circular polarized light on a large screen.

Meanwhile, the display device for a vehicle according to an embodiment of the present disclosure further includes a transparent cover disposed between the image generating device and the windshield, wherein a phase delay film is attached to the first area of the windshield, wherein the image generating device includes a liquid crystal display panel, wherein the liquid crystal display panel is configured to output a projection image of P polarized light, wherein the mirror reflects a projection image of S polarized light from the first area of the windshield, wherein the transparent cover is configured to output the projection image of S polarized light to the second area of the windshield. Accordingly, it is possible to reduce the size of the display device for the vehicle while implementing a projection image of S polarized light on a large screen.

Meanwhile, the mirror includes: a base; and a mirror coating member formed on the base. Accordingly, the reflectivity of the mirror can be improved.

Meanwhile, the mirror includes: a base; a photoadhesive film formed on the base; and a reflection film on the photoadhesive film. Accordingly, the reflectivity of the mirror can be improved.

Meanwhile, an optical path before a first reflection of the projection image output from the image generating device is longer than an optical path from after the first reflection to before a second reflection. Accordingly, it is possible to reduce the size of the display device for the vehicle while implementing a projection image on a large-screen.

According to another embodiment of the present disclosure, there is provided a display device for a vehicle including: an image generating device configured to output a projection image toward a windshield; and a mirror configured to reflect a projection image reflected first from the windshield toward the windshield, wherein the projection image from the mirror is reflected secondarily from the windshield, and wherein an optical path before a first reflection of the projection image output from the image generating device is longer than an optical path from after the first reflection to before a second reflection. Accordingly, it is possible to reduce the size of the display device for the vehicle while implementing a projection image on a large-screen. In particular, it is possible to reduce the size while securing an optical path.

### BRIEF DESCRIPTION OF THE DRAWINGS

FIG. 1 is a drawing illustrating an example of the exterior and interior of a vehicle.
FIGS. 2A and 2B are drawings illustrating various examples of the internal configuration of a display device for a vehicle related to the present disclosure.
FIG. 3 is a drawing illustrating an example of the internal configuration of a display device for a vehicle according to an embodiment of the present disclosure.
FIG. 4 is a drawing for explaining FIG. 3.
FIG. 5 is a drawing illustrating an example of the internal configuration of a display device for a vehicle according to another embodiment of the present disclosure.
FIG. 6 is a drawing illustrating an example of the internal configuration of a display device for a vehicle according to another embodiment of the present disclosure.
FIG. 7 is a drawing illustrating an example of the internal configuration of a display device for a vehicle according to another embodiment of the present disclosure.
FIGS. 8A and 8B are drawings illustrating various examples of a mirror of FIGS. 3 to 7.
FIGS. 9A to 10B are drawings for explaining FIGS. 3 to 7.

### DETAILED DESCRIPTION

Hereinafter, the present disclosure will be described in more detail with reference to the drawings.

The suffixes "module" and "part" used for components in the following description are merely intended to facilitate description of the specification, and the suffixes do not have any special meaning or function. Accordingly, the "module" and "part" can be used interchangeably.

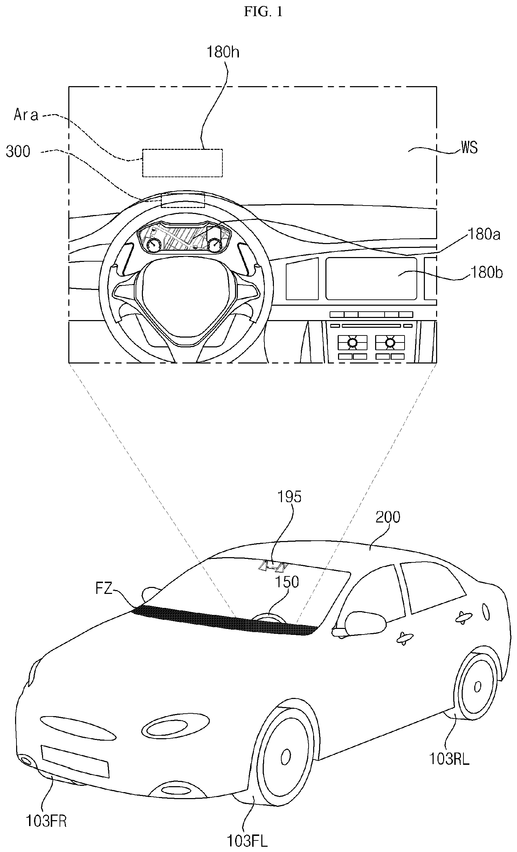

FIG. 1 is a drawing showing an example of the exterior and interior of a vehicle.

Referring to the drawing, a vehicle 200 is operated by a plurality of wheels 103FR, 103FL, 103RL,... that rotate by a power source and a steering wheel 150 for controlling the moving direction of the vehicle 200.

Meanwhile, the vehicle 200 can further include a camera 195 for obtaining images in front of the vehicle.

Meanwhile, the vehicle 200 can include a plurality of displays 180a, 180b, 180h, which display images, information, etc., that are provided therein.

For example, among the plurality of displays 180a, 180b, 180h, a first display 180a can be a cluster display, a second display 180b can be an Audio Video Navigation (AVN) display, and a third display 180h can be a HUD display which is a head up display (HUD) that projects an image onto a certain separated area Ara on a windshield WS.

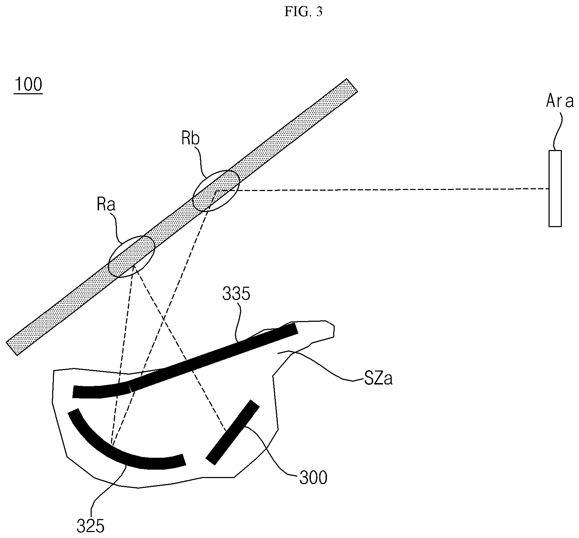

Meanwhile, a display device for a vehicle (100 of FIG. 3) according to an embodiment of the present disclosure is a device for the HUD display 180h.

Meanwhile, a black masking area or a frit area Fz can be formed in the lower area of the windshield WS, as shown in the drawing.

Meanwhile, the vehicle 200 described in this specification can be a concept that includes all of a vehicle equipped with an engine as a power source, a hybrid vehicle equipped with an engine and an electric motor as power sources, and an electric vehicle equipped with an electric motor as a power source.

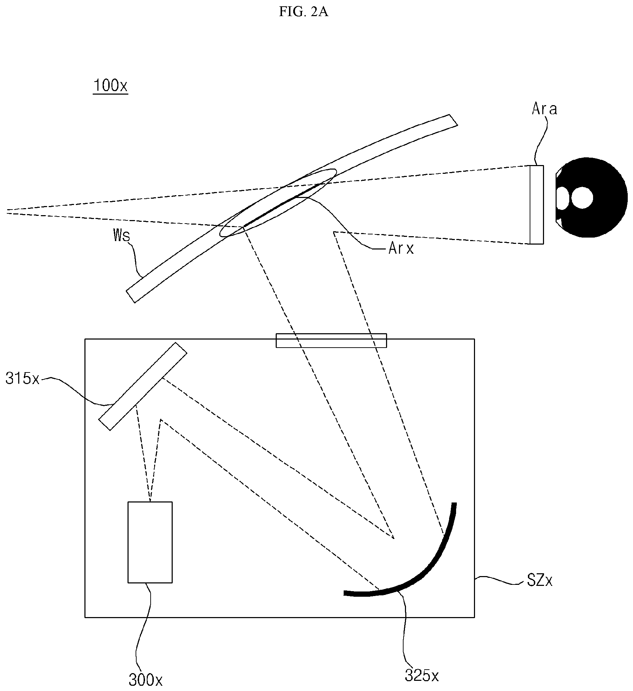

FIGS. 2A to 2B are drawings illustrating various examples of the internal configuration of a display device for a vehicle related to the present disclosure.

FIG. 2A illustrates an example of a display device for a vehicle related to the present disclosure.

Referring to the drawing, a display device 100x for a vehicle related to the present disclosure includes a liquid crystal display panel 300x configured to output a projection image, a fold mirror 315x configured to reflect the projection image from the liquid crystal display panel 300x, and a concave mirror 325x configured to reflect the projection image from the fold mirror 315x to a windshield WS.

The projection image reflected from a certain area Arx of the windshield WS is output to a driver's viewing area Ara.

The concave mirror 325x in the display device 100x for a vehicle is disposed between the liquid crystal display panel 300x and the driver's viewing area Ara.

Meanwhile, the concave mirror 325x in the display device 100x for a vehicle determines the arrangement of the projection image and the position of the light source.

For example, by increasing the magnification of the concave mirror 325x in the display device 100x for a vehicle and reducing the focal length, the size SZx of the display device 100x for a vehicle can be reduced.

However, when reducing the size in this way, it becomes difficult to realize a projection image on a large screen, which includes the disadvantage of making it difficult to realize an AR HUD.

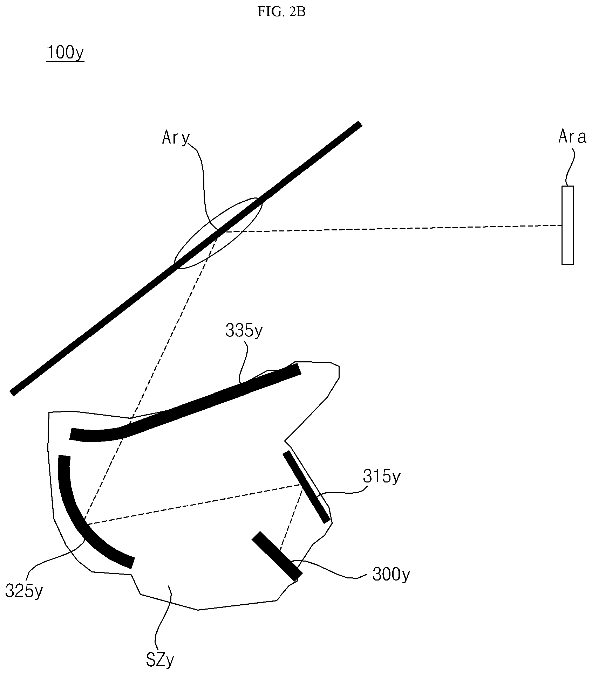

FIG. 2B illustrates another example of a display device for a vehicle related to the present disclosure.

Referring to the drawing, a display device 100y for a vehicle related to the present disclosure includes a liquid crystal display panel 300y configured to output a projection image, a fold mirror 315y configured to reflect the projection image from the liquid crystal display panel 300y, a concave mirror 325y configured to reflect the projection image from the fold mirror 315y, and a transparent cover 335y configured to output the projection image from the concave mirror 325y to a windshield WS.

A projection image reflected from a certain area Ary of the windshield WS is output to a driver's viewing area Ara.

Unlike FIG. 2A, the concave mirror 325y in the display device 100y for a vehicle is disposed in front of the liquid crystal display panel 300y and the driver's viewing area Ara.

That is, the liquid crystal display panel 300y in the display device 100y for a vehicle is disposed between the concave mirror 325y and the driver's viewing area Ara.

Meanwhile, the concave mirror 325y in the display device 100y for a vehicle determines the arrangement of the projection image and the position of the light source.

For example, by increasing the magnification of the concave mirror 325y in the display device 100y for a vehicle and reducing the focal length, the size SZy of the display device 100y for a vehicle can be reduced.

However, when reducing the size in this way, it becomes difficult to realize a projection image on a large screen, which includes the disadvantage of making it difficult to realize an AR HUD.

Therefore, this disclosure proposes a method for reducing the size of a display device for a vehicle while realizing a projection image on a large screen.

In particular, unlike FIGS. 2A and 2B, a display device 100 for a vehicle utilizing two reflections on a windshield WS is proposed. This is described with reference to FIG. 3 and below.

FIG. 3 is a drawing showing an example of the internal configuration of a display device for a vehicle according to an embodiment of the present disclosure.

Referring to the drawing, a display device 100 for a vehicle according to an embodiment of the present disclosure includes an image generating device 300 configured to output a projection image in the direction of a windshield WS, and a mirror 325 configured to reflect a projection image reflected from a first area Ra of the windshield WS in the direction of the windshield WS.

The projection image from the mirror 325 is reflected from a second area Rb of the windshield WS and output to a third area Ara. At this time, the third area Ara can correspond to the driver's viewing area.

Meanwhile, since the display device 100 for a vehicle according to an embodiment of the present disclosure utilizes two reflections from the windshield WS, it is possible to reduce the size while sufficiently securing an optical path.

That is, the size of the display device 100 for a vehicle according to an embodiment of the present disclosure is SZa that is smaller than the size SZx of the display device 100x for a vehicle of FIG. 2A or the size SZy of the display device 100y for a vehicle of FIG. 2B.

Accordingly, it is possible to reduce the size of the display device for the vehicle while implementing a projection image on a large-screen. In particular, it is possible to reduce the size while securing an optical path.

Meanwhile, the second area Rb of the windshield WS can be closer to the third area Ara than the first area Ra of the windshield WS.

Meanwhile, the incident angle of the projection image incident on the first area Ra of the windshield WS can be greater than the incident angle of the projection image incident on the second area Rb of the windshield WS. Accordingly, it is possible to reduce the size of the display device for the vehicle while implementing a projection image on a large screen.

Meanwhile, the image generating device 300 can be closer to the third area Ara than the mirror 325.

Meanwhile, the position of the image generating device 300 can be disposed at a higher position than the position of the mirror 325. Accordingly, it is possible to reduce the size of the display device for the vehicle while implementing a projection image on a large screen.

Meanwhile, the image generating device 300 can be equipped with a digital mirror device or a liquid crystal display panel. Accordingly, the projection image can be output to the outside of the image generating device 300.

For example, the image generating device 300 can include a light source (not shown) and a digital mirror device (not shown) configured to reflect light output from the light source.

The light source can include an LED diode or a laser diode, etc.

Meanwhile, the digital mirror device can have a plurality of digital mirrors. For example, it can have a digital micromirror device (DMD).

As another example, the image generating device 300 can include a light source not shown and a liquid crystal display panel not shown configured to output a projection image based on light output from the light source.

Meanwhile, the liquid crystal display panel can output a projection image of P polarized light.

Meanwhile, the first area Ra of the windshield WS can correspond to the black masking area or the frit area FZ of FIG. 1. Accordingly, the brightness of the projection image can be improved.

Meanwhile, the display device 100 for a vehicle according to an embodiment of the present disclosure can further include a transparent cover 335 disposed between the image generating device 300 and the windshield WS. Accordingly, the interior of the image generating device 300 can be protected while the projection image can be output to the outside of the image generating device 300.

Meanwhile, in the display device 100x for a vehicle of FIG. 2A, an optical path before a first reflection of the projection image output from the liquid crystal display panel 300x is formed smaller than an optical path ranging from after the first reflection to before a second reflection.

At this time, the optical path before the first reflection of the projection image output from the liquid crystal display panel 300x corresponds to between the liquid crystal display panel 300x and the fold mirror 315x, and the optical path from after the first reflection to before the second reflection corresponds to between the fold mirror 315x and the concave mirror 325x.

In particular, in the display device 100x for a vehicle of FIG. 2A, the optical path before the first reflection of the projection image output from the liquid crystal display panel 300x is significantly smaller than the optical path from after the first reflection to before the second reflection.

Meanwhile, the optical path before the first reflection of the projection image output from the image generating device 300 in the display device 100 for a vehicle according to an embodiment of the present disclosure is longer than the optical path from after the first reflection to before the second reflection.

The optical path before the first reflection of the projection image output from the image generating device 300 in the display device 100 for a vehicle in FIG. 3 corresponds to between the image generating device 300 and the first area Ra of the windshield WS.

Meanwhile, the optical path after the first reflection to before the second reflection in the display device 100 for a vehicle corresponds to between the first area Ra of the windshield WS and the mirror 325.

As shown in the drawing, the optical path before the first reflection of the projection image output from the image generating device 300 is formed longer than the optical path from after the first reflection to before the second reflection, so that a sufficient optical path can be secured within the display device 100 for a vehicle of a small size SZ.

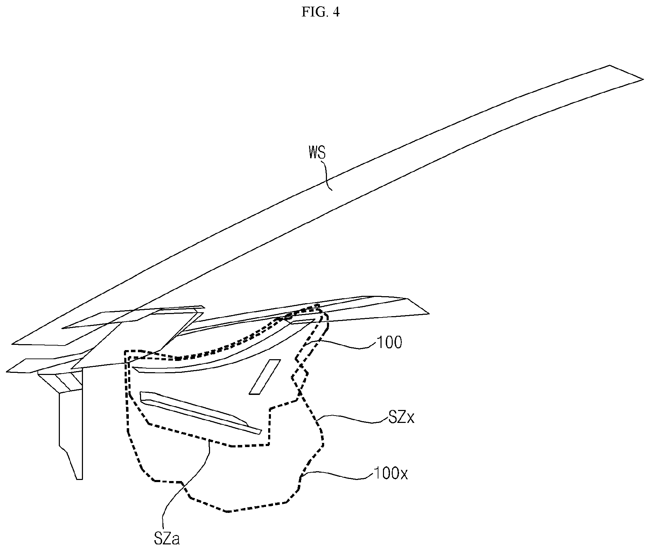

FIG. 4 is a drawing for explaining FIG. 3.

Referring to the drawing, the size of the display device 100 for a vehicle according to an embodiment of the present disclosure is SZa that is smaller than the size SZx of the display device 100x for a vehicle of FIG. 2A.

Furthermore, the size of the display device 100 for a vehicle according to an embodiment of the present disclosure is SZa that is smaller than the size SZy of the display device 100y for a vehicle of FIG. 2B.

Accordingly, it is possible to reduce the size of the display device for the vehicle while implementing a projection image on a large screen. In particular, it is possible to reduce the size while securing an optical path.

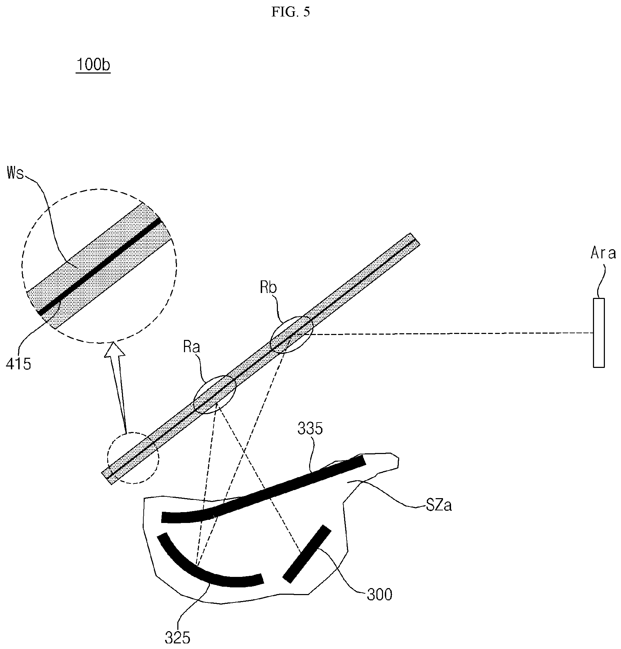

FIG. 5 is a drawing showing an example of the internal configuration of a display device for a vehicle according to another embodiment of the present disclosure.

Meanwhile, in the windshield WS, the reflectivity of S polarized light is higher than that of P polarized light. Accordingly, the brightness of the projection image based on S polarized light can be higher.

Accordingly, in order to improve the reflectivity of P polarized light, it is preferable that a P polarized light reflection film 415 is attached to the windshield WS.

Referring to the drawing, a display device 100b for a vehicle according to another embodiment of the present disclosure includes an image generating device 300 configured to output a projection image to a first area Ra of a windshield WS to which the P polarized light reflection film 415 is attached, and a mirror 325 configured to reflect the projection image reflected from the first area Ra of the windshield WS to a second area Rb of the windshield WS to which the P polarized light reflection film 415 is attached.

The projection image from the mirror 325 is reflected from the second area Rb of the windshield WS and output to the third area Ara. At this time, the third area Ara can correspond to the driver's viewing area. Accordingly, it is possible to reduce the size of the display device for the vehicle while implementing a projection image on a large screen.

Meanwhile, the display device 100b for a vehicle according to another embodiment of the present disclosure can further include a transparent cover 335 disposed between the image generating device 300 and the windshield WS. Accordingly, the interior of the image generating device 300 can be protected while the projection image can be output to the outside of the image generating device 300.

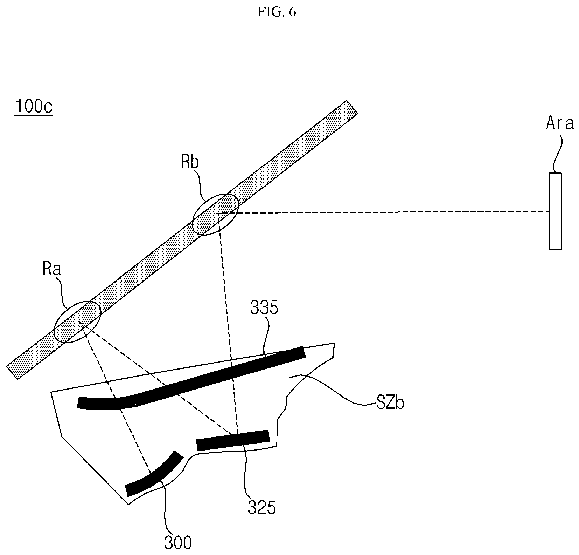

FIG. 6 is a drawing illustrating an example of the internal configuration of the display device for a vehicle according to another embodiment of the present disclosure.

Referring to the drawing, a display device 100c for a vehicle according to another embodiment of the present disclosure includes an image generating device 300 configured to output a projection image in the direction of a windshield WS, and a mirror 325 configured to reflect a projection image reflected from a first area Ra of the windshield WS in the direction of the windshield WS.

Meanwhile, the display device 100c for a vehicle of FIG. 6 is similar to the display device 100 for a vehicle of FIG. 3, but differs in the position of the disposition of the image generating device 300 and the mirror 325.

The projection image from the mirror 325 is reflected from the second area Rb of the windshield WS and output to the third area Ara. At this time, the third area Ara can correspond to the driver's viewing area.

Meanwhile, the display device 100c for a vehicle according to another embodiment of the present disclosure utilizes two reflections from the windshield WS, thereby reducing the size while sufficiently securing an optical path.

That is, the size of the display device 100c for a vehicle according to another embodiment of the present disclosure is SZb which is smaller than the size SZx of the display device 100x for a vehicle of FIG. 2A or the size SZy of the display device 100y for a vehicle of FIG. 2B.

Accordingly, it is possible to reduce the size of the display device for the vehicle while implementing a projection image on a large-screen. In particular, it is possible to reduce the size while securing an optical path.

Meanwhile, the second area Rb of the windshield WS can be closer to the third area Ara than the first area Ra of the windshield WS.

Meanwhile, the incident angle of the projection image incident on the first area Ra of the windshield WS can be greater than the incident angle of the projection image incident on the second area Rb of the windshield WS. Accordingly, it is possible to reduce the size of the display device for the vehicle while implementing a projection image on a large screen.

Meanwhile, the mirror 325 can be closer to the third area Ara than the image generating device 300.

Meanwhile, the position of the mirror 325 can be disposed at a higher position than the position of the image generating device 300. Accordingly, it is possible to reduce the size of the display device for the vehicle while implementing a projection image on a large screen.

Meanwhile, the image generating device 300 can include a digital mirror device or a liquid crystal display panel. Accordingly, the projection image can be output to the outside of the image generating device 300.

Meanwhile, the first area Ra of the windshield WS can correspond to the black masking area or the frit area FZ of FIG. 1. Accordingly, the brightness of the projection image can be improved.

Meanwhile, the display device 100c for a vehicle according to another embodiment of the present disclosure can further include a transparent cover 335 disposed between the image generating device 300 and the windshield WS. Accordingly, the interior of the image generating device 300 can be protected while the projection image can be output to the outside of the image generating device 300.

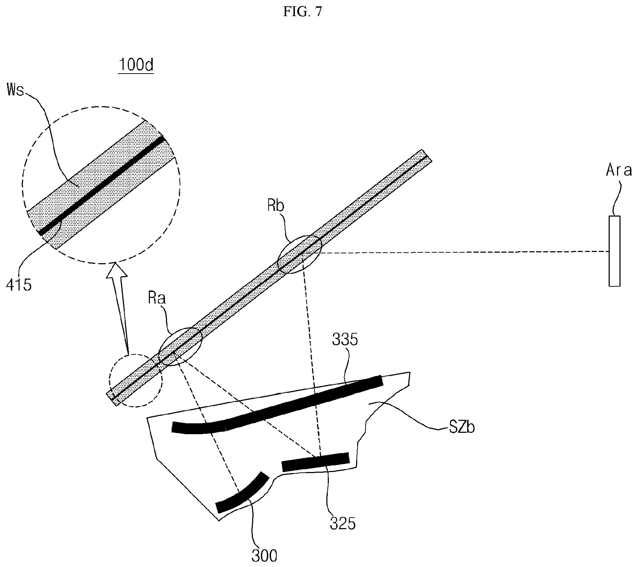

FIG. 7 is a drawing illustrating an example of the internal configuration of a display device for a vehicle according to another embodiment of the present disclosure.

Accordingly, in order to improve the reflectivity of P polarized light, it is preferable that the P polarized light reflection film 415 of the windshield WS is attached.

Referring to the drawing, a display device 100d for a vehicle according to another embodiment of the present disclosure includes an image generating device 300 configured to output a projection image to a first area Ra of a windshield WS to which the P polarized light reflection film 415 is attached, and a mirror 325 configured to reflect the projection image reflected from the first area Ra of the windshield WS to a second area Rb of the windshield WS to which the P polarized light reflection film 415 is attached.

The projection image from the mirror 325 is reflected from the second area Rb of the windshield WS and output to a third area Ara. At this time, the third area Ara can correspond to the driver's viewing area. Accordingly, it is possible to reduce the size of the display device for the vehicle while implementing a projection image on a large screen.

Meanwhile, the display device 100d for a vehicle of FIG. 7 is similar to the display device 100b for a vehicle of FIG. 5, but includes a difference in the disposition position of the image generating device 300 and the mirror 325.

Meanwhile, the display device 100d for a vehicle according to another embodiment of the present disclosure can further include a transparent cover 335 disposed between the image generating device 300 and the windshield WS. Accordingly, the interior of the image generating device 300 can be protected while the projection image can be output to the outside of the image generating device 300.

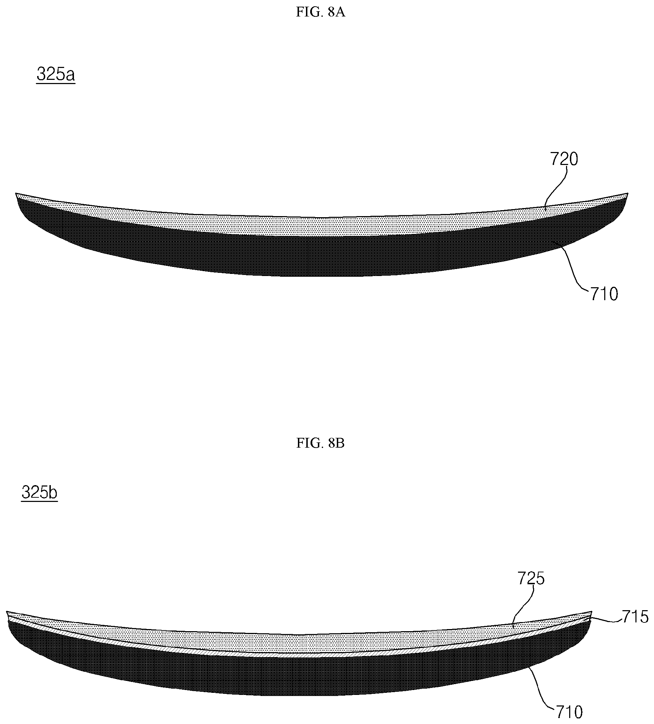

FIGS. 8A and 8B are drawings illustrating various examples of the mirror of FIGS. 3 to 7.

FIG. 8A is a drawing illustrating an example of a mirror.

Referring to the drawing, the mirror 325a of FIGS. 3 to 7 can be a concave mirror.

Meanwhile, the mirror 325a of FIGS. 3 to 7 can include a base 710 and a mirror coating member 720 formed on the base 710. Accordingly, the reflectivity of the mirror 325a can be improved.

The base 710 can be a depositable substrate, such as glass and plastic.

Meanwhile, the mirror coating member 720 can be a reflection coating member through deposition such as metal and dielectric.

FIG. 8B is a drawing illustrating another example of a mirror.

Referring to the drawing, the mirror 325b of FIGS. 3 to 7 can be a concave mirror.

Meanwhile, the mirror 325b of FIGS. 3 to 7 can include a base 710, an optical adhesive film 715 formed on the base 710, and a reflection film 725 on the optical adhesive film 715. Accordingly, the reflectivity of the mirror 325b can be improved.

The base 710 can be a depositable substrate such as glass and plastic. The optical adhesive film 715 can include an Optically Clear Adhesive (OCA).

Meanwhile, the reflection film 725 can be an optical film that can be attached through lamination, etc.

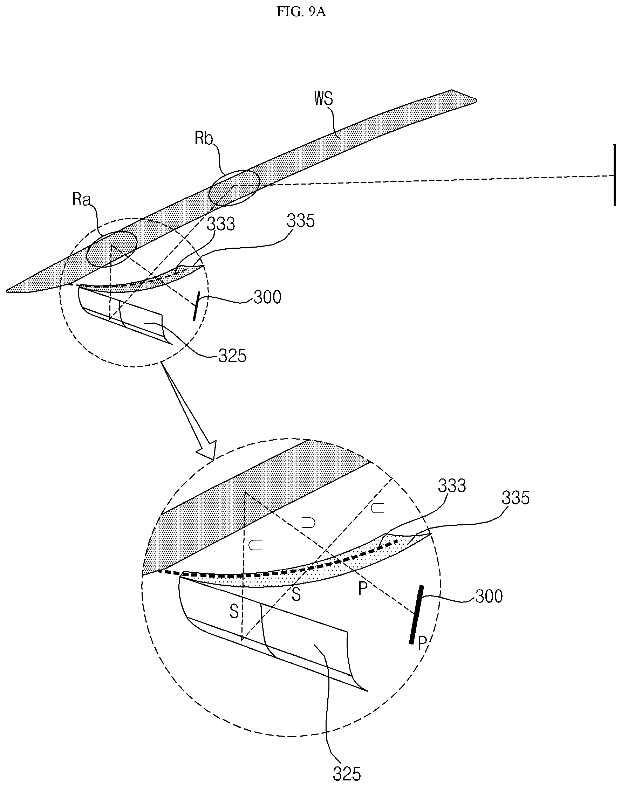

FIG. 9A to FIG. 10B are drawings for explaining FIG. 3 to FIG. 7.

FIG. 9A illustrates an example of an optical path of a projection image of P polarized light.

Referring to the drawing, the image generating device 300 in the display device 100, 100b, 100c, 100d for a vehicle of FIG. 3 to FIG. 7 includes a liquid crystal display panel, and the liquid crystal display panel can output a projection image of P polarized light.

Meanwhile, the image generating device 300 in the display device 100, 100b, 100c, 100d for a vehicle of FIG. 3 to FIG. 7 can further include a transparent cover 335 disposed between the image generating device 300 and the windshield WS, and a phase delay film 333 attached to the transparent cover 335.

Meanwhile, the phase delay film 333 can include a quarter wave plate (QWP).

Meanwhile, the transparent cover 335 outputs a projection image of right circular polarized light ⊃ based on a projection image of P polarized light to the first area Ra of the windshield WS, the mirror 325 outputs a projection image of S polarized light based on a projection image of left-handed polarized light ⊂ from the first area Ra of the windshield WS, and the transparent cover 335 can output a projection image of left-handed polarized light ⊂ based on a projection image of S polarized light to the second area Rb of the windshield WS. Accordingly, it is possible to reduce the size of the display device for the vehicle while implementing a projection image of left-handed polarized light ⊂ on a large screen.

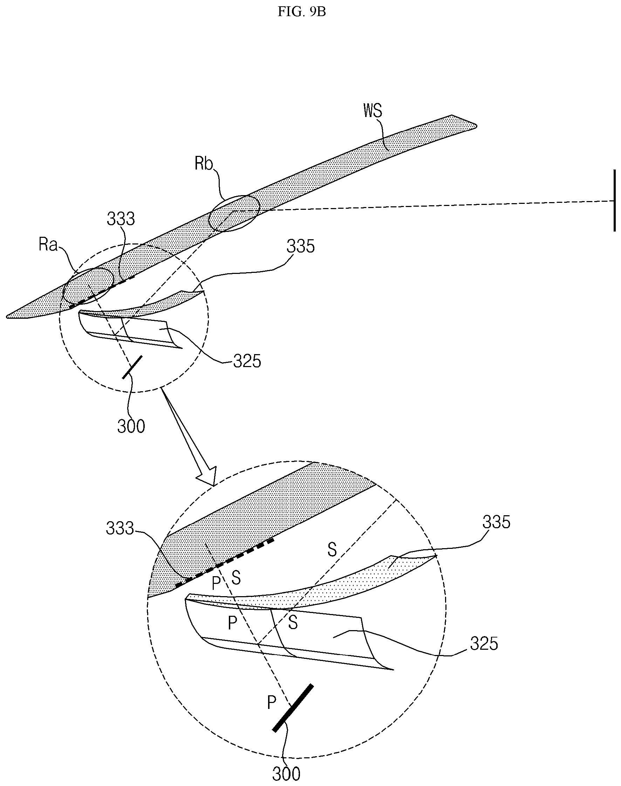

FIG. 9B illustrates another example of the optical path of the projection image of P polarized light.

Referring to the drawing, the image generating device 300 in the display device 100, 100b, 100c, 100d for a vehicle of FIGS. 3 to 7 includes a liquid crystal display panel, and the liquid crystal display panel can output a projection image of P polarized light.

Meanwhile, the image generating device 300 in the display device 100, 100b, 100c, 100d for a vehicle of FIGS. 3 to 7 can further include a transparent cover 335 disposed between the image generating device 300 and the windshield WS.

Meanwhile, a phase delay film 333 can be attached to the first area Ra of the windshield WS.

Meanwhile, the phase delay film 333 can include a quarter wave plate (QWP).

Meanwhile, the mirror 325 reflects the projection image of S polarized light from the first area Ra of the windshield WS, and the transparent cover 335 can output the projection image of S polarized light to the second area Rb of the windshield WS. Accordingly, the projection image of S polarized light on a large screen can be realized while reducing the size.

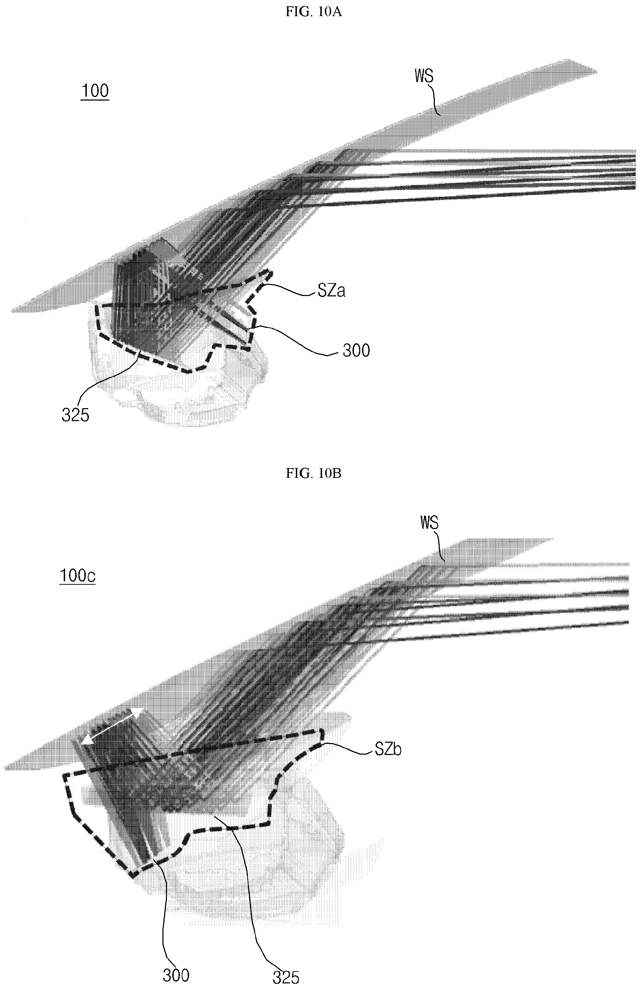

FIG. 10A is a drawing exemplifying an optical path in the display device 100 for a vehicle of FIG. 3.

Referring to the drawing, the image generating device 300 closer to the third area Ara than the mirror 325 outputs a plurality of lights to the first area Ra of the windshield WS.

The mirror 325 reflects a plurality of lights that are first reflected from the first area Ra of the windshield WS, and outputs them to the second area Rb of the windshield WS that is higher than the first area Ra of the windshield WS.

Meanwhile, a plurality of lights that are secondarily reflected from the second area Rb of the windshield WS are incident on the third area Ara corresponding to the user's viewing area.

Accordingly, a driver recognizes a virtual image in the opposite direction of the windshield WS.

As a result, it is possible to reduce the size of the display device for the vehicle while implementing a projection image on a large-screen. In particular, it is possible to reduce the size while securing the optical path.

FIG. 10B is a drawing illustrating an optical path in the display device 100c for a vehicle of FIG. 6.

Referring to the drawing, the image generating device 300 disposed further from the third area Ara than the mirror 325 outputs a plurality of lights to the first area Ra of the windshield WS.

The mirror 325 reflects a plurality of lights that are first reflected from the first area Ra of the windshield WS, and outputs them to the second area Rb of the windshield WS that is higher than the first area Ra of the windshield WS.

Meanwhile, a plurality of lights that are secondarily reflected from the second area Rb of the windshield WS are incident on the third area Ara corresponding to a user's viewing area.

Accordingly, a driver recognizes a virtual image in the opposite direction of the windshield WS.

As a result, it is possible to reduce the size of the display device for the vehicle while implementing a projection image on a large screen. In particular, it is possible to reduce the size while securing an optical path.

Meanwhile, although the present disclosure includes been described with reference to specific embodiments shown in the drawings, it is apparent to those skilled in the art that the present description is not limited to those exemplary embodiments and is embodied in many forms without departing from the scope of the present disclosure, which is described in the following claims.

## Claims

1. A display device (100) for a vehicle, the display device comprising:
an image generating device (300) configured to output a projection image toward a windshield (WS); and
a mirror (325) configured to reflect a projection image reflected from a first area (Ra) of the windshield, toward the windshield,
wherein the projection image from the mirror is reflected from a second area (Rb) of the windshield and output to a third area (Ara).

2. The display device of claim 1, wherein the second area (Rb) of the windshield (WS) is closer to the third area than the first area (Ra) of the windshield (WS).

3. The display device of any one of claims 1 to 2, wherein an incident angle of the projection image incident on the first area of the windshield is greater than an incident angle of the projection image incident on the second area of the windshield.

4. The display device of any one of claims 1 to 3, wherein the image generating device (300) is closer to the third area than the mirror (325).

5. The display device of any one of claims 1 to 3, wherein the mirror (325) is closer to the third area than the image generating device (300).

6. The display device of any one of claims 1 to 5, further comprising a transparent cover (335) disposed between the image generating device (300) and the windshield (WS).

7. The display device of any one of claims 1 to 6, wherein the image generating device (300) includes a digital mirror device or a liquid crystal display panel.

8. The display device of any one of claims 1 to 7, wherein the image generating device (300) is configured to output a projection image to the first area of the windshield to which a P polarized light reflection film is attached,
wherein the mirror (325) is configured to reflect the projection image to the second area of the windshield to which the P polarized light reflection film is attached.

9. The display device of any one of claims 1 to 8, wherein the first area (Ra) of the windshield (WS) corresponds to a black masking area or a frit area.

10. The display device of claim 9, further comprising:
a transparent cover (335) disposed between the image generating device (300) and the windshield (WS); and
a phase delay film (333) attached to the transparent cover,
wherein the image generating device (300) comprises a liquid crystal display panel,
wherein the liquid crystal display panel is configured to output a projection image of P polarized light,
wherein the transparent cover is configured to output a projection image of right circular polarized light to the first area of the windshield based on the projection image of P polarized light,
wherein the mirror outputs a projection image of S polarized light based on a projection image of left circular polarized light from the first area of the windshield,
wherein the transparent cover is configured to output a projection image of left circular polarized light to the second area of the windshield based on the projection image of S polarized light.

11. The display device of any one of claims 1 to 6, further comprising a transparent cover (335) disposed between the image generating device and the windshield,
wherein a phase delay film (333) is attached to the first area of the windshield,
wherein the image generating device (300) comprises a liquid crystal display panel,
wherein the liquid crystal display panel is configured to output a projection image of P polarized light,
wherein the mirror reflects a projection image of S polarized light from the first area of the windshield,
wherein the transparent cover is configured to output the projection image of S polarized light to the second area of the windshield.

12. The display device of any one of claims 1 to 11, wherein the mirror (325) comprises:
a base (710); and
a mirror coating member (720) formed on the base.

13. The display device of any one of claims 1 to 11, wherein the mirror (325) comprises:
a base (710);
a photoadhesive film (715) formed on the base; and
a reflection film (725) on the photoadhesive film.

14. The display device of any one of claims 1 to 4 or claims 6 to 13 if not dependent from claim 5, wherein an optical path before a first reflection of the projection image output from the image generating device is longer than an optical path from after the first reflection to before a second reflection.

## Patentansprüche

1. Anzeigevorrichtung (100) für ein Fahrzeug, wobei die Anzeigevorrichtung umfasst:
eine Bilderzeugungsvorrichtung (300), die dazu eingerichtet ist, ein Projektionsbild in Richtung einer Windschutzscheibe (WS) auszugeben; und
einen Spiegel (325), der dazu eingerichtet ist, ein von einem ersten Bereich (Ra) der Windschutzscheibe reflektiertes Projektionsbild in Richtung der Windschutzscheibe zu reflektieren,
wobei das Projektionsbild von dem Spiegel von einem zweiten Bereich (Rb) der Windschutzscheibe reflektiert und auf einen dritten Bereich (Ara) ausgegeben wird.

2. Anzeigevorrichtung nach Anspruch 1, wobei der zweite Bereich (Rb) der Windschutzscheibe (WS) näher an dem dritten Bereich liegt als der erste Bereich (Ra) der Windschutzscheibe (WS).

3. Anzeigevorrichtung nach einem der Ansprüche 1 bis 2, wobei ein Einfallswinkel des auf den ersten Bereich der Windschutzscheibe einfallenden Projektionsbildes größer ist als ein Einfallswinkel des auf den zweiten Bereich der Windschutzscheibe einfallenden Projektionsbildes.

4. Anzeigevorrichtung nach einem der Ansprüche 1 bis 3, wobei die Bilderzeugungsvorrichtung (300) näher an dem dritten Bereich liegt als der Spiegel (325).

5. Anzeigevorrichtung nach einem der Ansprüche 1 bis 3, wobei der Spiegel (325) näher an dem dritten Bereich liegt als die Bilderzeugungsvorrichtung (300).

6. Anzeigevorrichtung nach einem der Ansprüche 1 bis 5, die ferner eine transparente Abdeckung (335) umfasst, die zwischen der Bilderzeugungsvorrichtung (300) und der Windschutzscheibe (WS) angeordnet ist.

7. Anzeigevorrichtung nach einem der Ansprüche 1 bis 6, wobei die Bilderzeugungsvorrichtung (300) eine digitale Spiegelvorrichtung oder ein Flüssigkristall-Anzeigefeld umfasst.

8. Anzeigevorrichtung nach einem der Ansprüche 1 bis 7, wobei die Bilderzeugungsvorrichtung (300) dazu eingerichtet ist, ein Projektionsbild auf den ersten Bereich der Windschutzscheibe, an dem eine P-polarisierte Lichtreflexionsfolie angebracht ist, auszugeben,
wobei der Spiegel (325) dazu eingerichtet ist, das Projektionsbild auf den zweiten Bereich der Windschutzscheibe, an dem die P-polarisierte Lichtreflexionsfolie angebracht ist, zu reflektieren.

9. Anzeigevorrichtung nach einem der Ansprüche 1 bis 8, wobei der erste Bereich (Ra) der Windschutzscheibe (WS) einem schwarzen Maskierungsbereich oder einem Fritbereich entspricht.

10. Anzeigevorrichtung nach Anspruch 9, ferner umfassend:
eine transparente Abdeckung (335), die zwischen der Bilderzeugungsvorrichtung (300) und der Windschutzscheibe (WS) angeordnet ist; und
einen Phasenverzögerungsfilm (333), der an der transparenten Abdeckung angebracht ist,
wobei die Bilderzeugungsvorrichtung (300) ein Flüssigkristall-Anzeigefeld umfasst,
wobei das Flüssigkristall-Anzeigefeld dazu eingerichtet ist, ein Projektionsbild aus P-polarisiertem Licht auszugeben,
wobei die transparente Abdeckung dazu eingerichtet ist, auf der Grundlage des Projektionsbildes von P-polarisiertem Licht ein Projektionsbild von rechtszirkular polarisiertem Licht auf den ersten Bereich der Windschutzscheibe auszugeben,
wobei der Spiegel ein Projektionsbild von S-polarisiertem Licht auf der Grundlage eines Projektionsbildes von links zirkular polarisiertem Licht aus dem ersten Bereich der Windschutzscheibe ausgibt,
wobei die transparente Abdeckung dazu eingerichtet ist, auf der Grundlage des Projektionsbildes von S-polarisiertem Licht ein Projektionsbild von links zirkular polarisiertem Licht auf den zweiten Bereich der Windschutzscheibe auszugeben.

11. Anzeigevorrichtung nach einem der Ansprüche 1 bis 6, die ferner eine transparente Abdeckung (335), die zwischen der Bilderzeugungsvorrichtung und der Windschutzscheibe angeordnet ist, umfasst,
wobei eine Phasenverzögerungsfolie (333) an dem ersten Bereich der Windschutzscheibe angebracht ist,
wobei die Bilderzeugungsvorrichtung (300) ein Flüssigkristall-Anzeigefeld umfasst,
wobei das Flüssigkristall-Anzeigefeld dazu eingerichtet ist, ein Projektionsbild von P-polarisiertem Licht auszugeben,
wobei der Spiegel ein Projektionsbild von S-polarisiertem Licht von dem ersten Bereich der Windschutzscheibe reflektiert,
wobei die transparente Abdeckung dazu eingerichtet ist, das Projektionsbild von S-polarisiertem Licht an den zweiten Bereich der Windschutzscheibe auszugeben.

12. Anzeigevorrichtung nach einem der Ansprüche 1 bis 11, wobei der Spiegel (325) umfasst:
eine Basis (710); und
ein auf der Basis ausgebildetes Spiegelbeschichtungselement (720).

13. Anzeigevorrichtung nach einem der Ansprüche 1 bis 11, wobei der Spiegel (325) umfasst:
eine Basis (710);
eine lichtaktivierbare Klebefolie (715), die auf der Basis ausgebildet ist; und
einen Reflexionsfilm (725) auf der lichtaktivierbaren Klebefolie.

14. Anzeigevorrichtung nach einem der Ansprüche 1 bis 4 oder nach einem der Ansprüche 6 bis 13, sofern nicht von Anspruch 5 abhängig, wobei ein Strahlengang vor einer ersten Reflexion des von der Bilderzeugungsvorrichtung ausgegebenen Projektionsbildes länger ist als ein Strahlengang von nach der ersten Reflexion bis vor einer zweiten Reflexion.

## Revendications

1. Dispositif d'affichage (100) pour un véhicule, le dispositif affichage (100) comprenant :
un dispositif de génération d'images (300) conçu pour projeter une image sur un pare-brise (WS); et
un miroir (325) conçu pour renvoyer vers le pare-brise une image projetée réfléchie par une première zone (Ra) du pare-brise, en direction du pare-brise,
dans lequel l'image projetée par le miroir est réfléchie par une deuxième zone (Rb) du pare-brise et transmise vers une troisième zone (Ara).

2. Dispositif d'affichage selon la revendication 1, dans lequel la deuxième zone (Rb) du pare-brise (WS) est plus proche de la troisième zone que la première zone (Ra) du pare-brise (WS).

3. Dispositif d'affichage selon l'une quelconque des revendications 1 à 2, dans lequel l'angle d'incidence de l'image projetée sur la première zone du pare-brise est supérieur à l'angle d'incidence de l'image projetée sur la deuxième zone du pare-brise.

4. Dispositif d'affichage selon l'une quelconque des revendications 1 à 3, dans lequel le dispositif de génération d'images (300) est plus proche de la troisième zone que le miroir (325).

5. Dispositif d'affichage selon l'une quelconque des revendications 1 à 3, dans lequel le miroir (325) est plus proche que la troisième zone que le dispositif de génération d'images (300).

6. Dispositif d'affichage selon une quelconque revendication précédente 1 à 5, comprenant en outre un cache transparent (335) disposé entre le dispositif de génération d'images (300) et le pare-brise (WS).

7. Dispositif d'affichage selon l'une quelconque des revendications 1 à 6, dans lequel le dispositif de génération d'images (300) comprend un dispositif à miroirs numériques ou un écran d'affichage à cristaux liquides.

8. Dispositif d'affichage selon l'une quelconque des revendications 1 à 7, dans lequel le dispositif de génération d'images (300) est configuré pour projeter une image sur la première zone du pare-brise sur laquelle est fixé un film réfléchissant la lumière polarisée de type P,
dans lequel le miroir (325) est conçu pour réfléchir l'image projetée vers la deuxième zone du pare-brise sur laquelle est fixé le film de réflexion de la lumière polarisée P.

9. Dispositif d'affichage selon l'une quelconque des revendications 1 à 8, dans lequel la première zone (Ra) du pare-brise (WS) correspond à une zone de masquage noire ou à une zone frittée.

10. Dispositif d'affichage selon la revendication 9, comprenant en outre :
un cache transparent (335) disposé entre le dispositif de génération d'images (300) et le pare-brise (WS); et
un film à retard de phase (333) fixé au cache transparent,
dans lequel le dispositif de génération d'images (300) comprend un écran d'affichage à cristaux liquides,
dans lequel l'écran d'affichage à cristaux liquides est configuré pour délivrer une image projetée de lumière polarisée de type P,
dans lequel le cache transparent est conçu pour projeter une image de lumière polarisée circulairement droite sur la première zone du pare-brise, à partir de l'image de projection de la lumière polarisée P,
dans lequel le miroir produit une image projetée de lumière polarisée S à partir d'une image projetée de lumière polarisée circulairement gauche provenant de la première zone du pare-brise,
dans lequel le cache transparent est conçu pour projeter une image de lumière polarisée circulairement gauche sur la deuxième zone du pare-brise, à partir de l'image de projection de lumière polarisée de type S.

11. Dispositif d'affichage selon l'une quelconque des revendications 1 à 6, comprenant en outre un cache transparent (335) disposé entre le dispositif de génération d'images et le pare-brise,
dans lequel un film à retard de phase (333) est fixé sur la première zone du pare-brise,
dans lequel le dispositif de génération d'images (300) comprend un écran d'affichage à cristaux liquides,
dans lequel l'écran d'affichage à cristaux liquides est configuré pour délivrer une image projetée de lumière polarisée de type P,
dans lequel le miroir réfléchit une image projetée de lumière polarisée S provenant de la première zone du pare-brise,
dans lequel le cache transparent est conçu pour projeter l'image de lumière polarisée S sur la deuxième zone du pare-brise.

12. Dispositif d'affichage selon l'une quelconque des revendications 1 à 11, dans lequel le miroir (325) comprend:
une base (710); et
un élément de revêtement de miroir (720) formé sur la base.

13. Dispositif d'affichage selon l'une quelconque des revendications 1 à 11, dans lequel le miroir (325) comprend:
une base (710);
un film photoadhésif (715) formé sur la base; et
un film réfléchissant (725) sur le film photoadhésif.

14. Dispositif d'affichage selon l'une quelconque des revendications 1 à 4 ou les revendications 6 à 13 si elles ne dépendent pas de la revendication 5, dans lequel le trajet optique avant une première réflexion de l'image projetée par le dispositif de génération d'images est plus long que le trajet optique entre après la première réflexion et avant une deuxième réflexion.
